# EUROPÄISCHE PATENTSCHRIFT

(11) **EP 2 720 335 B1**
(45) Veröffentlichungstag und Bekanntmachung des Hinweises auf die Patenterteilung: **10.12.2025**
(21) Anmeldenummer: 13187997.5
(22) Anmeldetag: 10.10.2013
(51) Int. Cl.: H02H 3/24, H02H 3/06, H02H 7/18

(54) **Schaltung zur Steuerung der Energieversorgung eines elektrischen Geräts sowie elektrisches Gerät mit einer Schaltung**
Circuit for controlling the energy supply to an electric device as well as an electrical device with a circuit
Circuit de commande de l'alimentation en énergie d'un appareil électrique et appareil électrique doté d'un circuit

(30) Priorität: 12.10.2012 DE 102012218678
(43) Veröffentlichungstag der Anmeldung: 16.04.2014
(73) Patentinhaber: AUMOVIO Germany GmbH, 60488 Frankfurt am Main (DE)
(72) Erfinder: Hemmat-Esfandabadi, Riaz, 78126 Königsfeld - Neuhausen (DE)
(74) Vertreter: Aumovio Corporation

(56) Entgegenhaltungen:
- EP-A1- 0 272 514
- DE-A1- 102006 028 708
- US-A- 3 409 802
- US-A- 4 005 344
- US-A1- 2003 151 445
- ""HOT-PLUG" PROTECTION CIRCUIT", IBM TECHNICAL DISCLOSURE BULLETIN, INTERNATIONAL BUSINESS MACHINES CORP. (THORNWOOD), US, vol. 37, no. 9, 1 September 1994 (1994-09-01), pages 189 - 192, XP000473380, ISSN: 0018-8689

## Beschreibung

Die Erfindung betrifft eine Schaltung zur Steuerung der Energieversorgung eines elektrischen Geräts, die zur Steuerung einer Verbindung zwischen einem Schaltungseingang und einem Schaltungsausgang eingerichtet ist. Außerdem betrifft die Erfindung ein elektrisches Gerät mit einer solchen Schaltung.

Insbesondere bei Geräten, die über zwei oder mehr Versorgungspfade verfügen, kann in bestimmten Fällen die Abschaltung der Versorgungsquellen durch das Gerät selbst von Vorteil sein. Beispielsweise sind Geräte in Kraftfahrzeugen bekannt, die mit der Fahrzeugbatterie verbunden sind und zusätzlich eine interne Batterie aufweisen. Solange eine Spannung von der Fahrzeugbatterie zur Verfügung steht, wird diese zur Versorgung des Geräts verwendet. Nur bei unzureichender Spannung der Fahrzeugbatterie wird die interne Batterie zur Stromversorgung des elektrischen Geräts verwendet.

Bei derartigen Geräten ist es zumeist erforderlich, die interne Batterie vor einer Tiefentladung zu schützen. Hierzu sollte das Gerät von der Batterie getrennt und abgeschaltet werden, wenn die Spannung der Fahrzeugbatterie unzureichend ist und die Spannung der internen Batterie zu weit absinkt. Sobald erneut eine zur Versorgung ausreichende Spannung der Fahrzeugbatterie zur Verfügung steht, soll das Gerät automatisch starten.

Eine Schaltung, die für eine wie vorangehend beschriebene Steuerung der Energieversorgung eingerichtet ist, ist beispielsweise aus der DE 10 2009 013 232 A1 bekannt. Die dort offenbarte Schaltung weist ein Schalterbauteil auf, das zwischen den Schaltungseingang und den Schaltungsausgang geschaltet ist und zusätzlich zu seinen Verbindungen mit dem Schaltungseingang und Schaltungsausgang einen Schalteingang zur Steuerung des Schalterbauteils aufweist. Außerdem umfassen die dort offenbarte Schaltung einen Steuerkreis, über den der Schalteingang des Schalterbauteils angesteuert wird. Die in der genannten Druckschrift offenbarte Schaltung verbraucht jedoch auch dann Strom, wenn sie die Verbindung zwischen Schaltungseingang und Schaltungsausgang trennt, d.h. wenn Sie grade den Stromverbrauch möglichst vollständig verhindern soll, um eine Tiefentladung zu vermeiden.

Die DE 10 2006 028 708 A1 offenbart eine Schaltungsanordnung zur Unterspannungserkennung einer Energiequelle mit einem Transistorschalter und zumindest einem weiteren Schaltmittel. Die Schaltungsanordnung ist dadurch gekennzeichnet, dass der Transistorschalter und das weitere Schaltmittel in einem Betriebszustand der Schaltungsanordnung niederohmig sind und der Transistorschalter das weitere Schaltmittel zur Unterbrechung der Spannungsversorgung sperrt, wenn eine Versorgungsspannung der Energiequelle einen definierten Spannungswert unterschreitet.

Weitere Vorrichtungen zum Schutz von Batterien werden in der US 3 409 802 A und der US 4 005 344 A beschrieben.

Die Veröffentlichung IBM Technical Disclosure Bulletin Vol. 37 No. 09 September 1994 "Hot-Plug Protection Circuit" offenbart eine Schaltung zur Verhinderung von hohen Stromstößen und niedrigen Spannungseinbrüchen an einer Niederspannungsquelle.

Aufgabe der Erfindung ist es, ausgehend von der DE 10 2009 013 232 A1 eine Schaltung vorzuschlagen, die zur Steuerung der Verbindung zwischen Schaltungseingang und Schaltungsausgang ausgebildet ist und nur dann Strom benötigt, wenn der Schaltungseingang mit dem Schaltungsausgang verbunden wird. Eine weitere Aufgabe der Erfindung ist es, ein elektrisches Gerät mit einer solchen Schaltung vorzuschlagen.

Diese Aufgaben werden durch ein elektrisches Gerät nach Anspruch 1 gelöst. Vorteilhafte Weiterbildungen und Ausgestaltungen ergeben sich mit den Merkmalen der Unteransprüche.

Wie aus dem Stand der Technik bekannt, umfasst die Schaltung des Geräts ein Schalterbauteil, das mit dem Schaltungseingang und dem Schaltungsausgang verbunden ist und einen Schalteingang aufweist. Das Schalterbauteil ist dazu ausgebildet, abhängig von einem am Schalteingang anliegenden Steuersignal auf Durchgang oder auf Unterbrechung zu Schalten.

Außerdem umfasst die Schaltung einen Steuerkreis der zum Ausgeben eines Steuersignals an den Schalteingang dient. Der Steuerkreis ist derart ausgebildet, dass er - unter der Bedingung, dass ihm eine erforderliche Versorgungsspannung zugeführt wird - das Schalterbauteil auf Durchlass schaltet, wenn die am Schaltungseingang anliegende Spannung über einem Referenzwert liegt, und auf Unterbrechung schaltet, wenn die am Schaltungseingang anliegende Spannung unter dem Referenzwert liegt.

Erfindungsgemäß ist der Steuerkreis mit dem Schaltungsausgang derart verbunden, dass die Spannungsversorgung des Steuerkreises abhängig von der Spannung am Schaltungsausgang realisiert wird. Ist das Schalterbauteil auf Unterbrechung geschaltet, wird dem Steuerkreis somit nicht mit der erforderlichen Versorgungsspannung zum Durchführen des Vergleichs von Spannung und Referenzwert bzw. zum Steuern des Schalterbauteils versorgt. Dies sorgt dafür, dass die Schaltung nur dann im relevanten Maße Strom verbraucht, wenn die Spannung über dem Referenzwert liegt, d. h. wenn keine Tiefentladung droht.

Zusätzlich umfasst die Schaltung eine Startschaltung, die mit dem Schaltungseingang verbunden ist und dazu ausgebildet ist, abhängig von einem Spannungsanstieg am Schaltungseingang das Schaltungsbauteil auch dann auf Durchlass zu schalten, wenn dem Steuerkreis keine Versorgungsspannung zugeführt wird. Die Startschaltung dient somit dazu, dem Steuerkreis dann die zum Vergleich von Spannung und Referenzwert notwendige Versorgungsspannung zuzuführen, wenn aufgrund eines Anstiegs der Spannung am Schaltungseingang möglicherweise die Spannung über den Referenzwert angestiegen sein könnte. Hierdurch wird gewährleistet, dass die Schaltung bei einem Wechsel eines mit dem Schaltungseingang verbundenen Energiespeichers den Betrieb aufnehmen kann, obwohl der Steuerkreis nur bei auf Durchlass geschaltetem Schalterbauteil eine Versorgungsspannung zugeführt bekommt. Die Startschaltung dient also dem Bootstrapping, d. h. dem kurzzeitigen Aktivieren einer komplizierteren, Strom verbrauchenden Schaltung (des Steuerkreises) durch eine unkomplizierte und stromsparende Schaltung (der Startschaltung), wobei sich die kompliziertere Schaltung nach dem kurzzeitigen Aktivieren selbst aktiv hält (durch Bezug der Versorgungsspannung abhängig von der Spannung am Schaltungsausgang und Steuerung des Schalterbauteils durch den Steuerkreis). Die Startschaltung verbraucht vorzugsweise zumindest dann, wenn die Spannung am Schaltungseingang konstant ist, keinen Strom.

In einer besonders bevorzugten Ausführungsform kann die Startschaltung als eine Verzögerungsschaltung ausgebildet sein, die dazu ausgebildet ist, eine am Schaltungseingang anliegende Spannung bzw. die Änderung der am Schaltungseingang anliegenden Spannung verzögert und/oder geglättet auszugeben. Insbesondere kann ein Tiefpass als Verzögerungsschaltung verwendet werden bzw. die Verzögerungsschaltung kann einen Tiefpass umfassen. Durch die verzögerte Ausgabe entsteht bei sich ändernder Spannung am Schaltungseingang eine Spannungsdifferenz zwischen der Spannung am Schaltungseingang und der durch die Verzögerungsschaltung verzögerten bzw. geglätteten Spannung. Diese Spannungsdifferenz kann dazu verwendet werden, dass Schalterbauteil zu schalten.

In einer besonders bevorzugten Ausführungsform sind der Steuerkreis und die Verzögerungsschaltung so eingerichtet, dass die verzögerte und/oder geglättete Spannung zumindest zeitweise (vorzugsweise zumindest dann, wenn die Schaltung vorangehend nicht mit einer Spannung versorgt wurde und neu mit einer Spannung versorgt wird) an den Schalteingang des Schalterbauteils angelegt wird. Das Schalterbauteil ist in derartigen Ausführungsformen dazu eingerichtet, abhängig von einer Spannungsdifferenz zwischen dem Schaltungseingang und dem Schalteingang zu schalten.

Ein derartiges Schaltverhalten des Schalterbauteils ist insbesondere möglich, wenn als Schalterbauteil ein Transistor, vorzugsweise ein MOSFET (insbesondere ein P-Channel-MOSFET), verwendet wird. Besonders bevorzugt kann ein MOSFET verwendet werden, der bei einem nicht mit Spannung versorgten Gate leitend ist, der also dann leitet, wenn die Spannung am Schaltungseingang (bzw. am Source-Anschluss des MOSFETs) um mindestens einen von der Wahl des MOSFETs abhängigen Betrag größer ist, als die Spannung am Schalteingang (bzw. am Gate-Anschluss des MOSFETS).

Der Steuerkreis umfasst eine Vergleichsschaltung, die dem Vergleich einer von der am Schalteingang anliegenden Spannung abhängigen Spannung mit dem Referenzwert dient. Insbesondere kann die Spannung am Schaltungsausgang mit dem Referenzwert verglichen werden. Als Vergleichsschaltung kann insbesondere ein Mikrocontroller verwendet werden, der besonders bevorzugt einen integrierten Analog-Digital-Umsetzer aufweist oder mit einem externen Komparator verbunden ist.

Efindungsgemäß umfasst der Steuerkreis eine mit der Starterschaltung verbundene Verknüpfungsschaltung. Die Verknüpfungsschaltung dient dazu, ein Steuersignal auszugeben, dass zumindest zeitweise vom Ausgangssignal der Startschaltung abhängt. Insgesamt wird das Steuersignal somit jeweils zumindest zeitweise von der Startschaltung und von der Vergleichsschaltung beeinflusst. Besonders bevorzugt kann die Verknüpfungsschaltung dazu eingerichtet sein, zeitweise das Ausgangssignal der Startschaltung als Steuersignal auszugeben bzw. weiterzuleiten. Insbesondere kann von einem Signal der Vergleichsschaltung abhängen, ob das Ausgangssignal der Startschaltung durch die Verknüpfungsschaltung an den Steuereingang weitergeleitet wird oder nicht.

Besonders bevorzugt kann die Verknüpfungsschaltung dazu ausgebildet sein, dann, wenn der Steuerkreis (vorzugsweise die Vergleichsschaltung des Steuerkreises) eine über dem Referenzwert liegenden Spannung am Schaltungseingang erfasst, den Schalteingang des Schalterbauteils einem, vorzugsweise festem, Potential zu verbinden, wobei das Potential dazu geeignet ist, das Schalterbauteil auf Durchgang zu schalten und wobei das Potential zumindest zeitweise dem Steuersignal entspricht. Die Verknüpfungsschaltung kann außerdem dazu ausgebildet sein, dann wenn der Steuerkreis bzw. die Vergleichsschaltung entweder eine unter dem Referenzwert liegende Spannung feststellt oder aufgrund einer unzureichenden Spannungsversorgung keinen Vergleich durchführt, dem Schalterbauteil das Ausgangssignal der Startschaltung als Steuersignal zuzuführen. Dieses Ausgangssignal schaltet - wie bereits erwähnt - das Schalterbauteil nur dann auf Durchgang, wenn die Spannung am Schaltungseingang ansteigt und schaltet das Schalterbauteils ansonsten auf Unterbrechung. Eine Verknüpfungsschaltung, die wie vorangehend ausgebildet ist,

umfasst ein Schaltelement - und zwar einen Transistor, - wobei das Schaltelement einen Eingang, einen Ausgang sowie einen Steuereingang zum Steuern einer Verbindung zwischen dem Eingang und dem Ausgang, d. h. zum Schalten des Schaltelements auf Durchgang oder Unterbrechung, aufweist. Der Eingang des Schaltelements ist mit dem Potential und der Ausgang mit der Startschaltung und dem Schalteingang verbunden. Hierdurch wird der Schalteingang des Schalterbauteils abhängig vom Schaltzustand des Schalterelements entweder das Potential oder ein Ausgangssignal der Startschaltung zugeführt. Um die Verknüpfungsschaltung abhängig von dem Ergebnis des erwähnten Vergleichs von Spannung und Referenzwert zu steuern, ist der Steuereingang des Schaltelements mit der Vergleichsschaltung verbunden.

In einigen Ausführungsformen umfasst die Startschaltung ein Speicherelement. Das von der Verknüpfungsschaltung ausgegebene Steuersignal entspricht in derartigen Ausführungsformen beim Verbinden des Potentials mit dem Schalteingang, d. h. dann, wenn das Schaltelement auf Durchgang geschaltet ist, dem Potential. Während der Schalteingang bzw. die Ausgangsseite der Startschaltung mit dem Potential verbunden ist, wird das Speicherelement entladen. Stellt die Vergleichsschaltung eine zu niedrige Spannung fest und schaltet dementsprechend das Schaltelement auf Sperren (d. h. dann, wenn das Potential nicht mit dem Schalteingang verbunden ist), entspricht das Steuersignal einer Spannung des Speicherelements und somit dem Ausgangssignal der Startschaltung. Währenddessen wird das Speicherelement über die Spannung am Schaltungseingang geladen. Dadurch, dass das Speicherelement nach dem Schalten des Schaltelements auf Sperren zunächst geladen wird, sodass sich die Spannung am Schalteingang des Schalterbauteils nur verzögert ändert, führen kurzzeitige Spannungsschwankungen am Schaltungseingang nicht direkt zum Trennen der Verbindung zwischen Schaltungseingang und Schaltungsausgang. Ein ungewolltes Trennen dieser Verbindung, beispielsweise aufgrund einer Spannungsschwankung, wird somit zuverlässig vermieden. Vorzugsweise ist die Kapazität des Speicherelements so gewählt, dass das Schalterbauteil erst zwischen einer Millisekunde und einer Sekunde (besonders vorzugsweise zwischen 100 und 500 Millisekunden) nach einem Absinken der Spannung unter den Referenzwert auf Sperren schaltet.

Die Vergleichsschaltung kann in einigen Ausführungsvarianten auch dazu ausgebildet sein, den Schalteingang mit dem Potential gepulst zu verbinden, wenn sie eine über dem Referenzwert liegende Spannung feststellt, d. h. es ist nicht zwingend notwendig, dass das Schaltelement bei über dem Referenzwert liegender Spannung durchgehend auf Durchgang geschaltet ist. Dadurch, dass das Steuersignal bei auf Sperren geschaltetem Schaltelement der Spannung des Speicherelements entspricht, sodass ein Sperren des Schaltelements nicht direkt die Ausgabe eines Steuersignals zum Schalten des Schalterbauteils auf Sperren bewirkt, bleibt auch bei einem gepulsten Signal der Vergleichsschaltung das Schalterbauteil zuverlässig auf Durchgang geschaltet, solange die dem Schaltungseingang zugeführte Spannung über dem Referenzwert liegt.

Erfindungsgemäß umfasst die Schaltung Begrenzungsmittel zum Begrenzen eines Einschaltstromes. Das Begrenzen des Einschaltstromes erfolgt durch zumindest zeitweises Reduzieren einer Leitfähigkeit des Schalterbauteils abhängig von einer Spannung am Schaltungsausgang und/oder Schaltungseingang. Das Begrenzungsmittel ist dazu ausgebildet, dem Schalteingang des Schalterbauteils ein Kopplungssignal der Spannung des Schaltungsausgangs und/oder Schaltungseingangs zuzuführen. Hierfür kann das Begrenzungsmittel entsprechende Koppelmittel umfassen, die entweder zwischen den Schaltungseingang und den Schalteingang oder zwischen den Schaltungsausgang und den Schalteingang geschaltet sein können. Die Koppelmittel sind bevorzugt derart ausgebildet, dass das erzeugte Kopplungssignal deutlich kürzer ist als eine Dauer, die die Startschaltung das Schalterbauteil unabhängig davon, ob die der Schaltung zugeführte Spannung über oder unter dem Referenzwert liegt, auf Durchlass schaltet.

Besonders bevorzugt können die Koppelmittel als Kondensator ausgebildet sein oder zumindest einen Kondensator umfassen. Das Rückkoppelsignal entsteht dann dadurch, dass die zum Schaltungseingang bzw. Schaltungsausgang gerichtete Elektrode des Kondensators geladen wird, wodurch die zum Schalteingang weisende Elektrode eine entgegengesetzte Ladung als energetisch günstigsten Zustand anstrebt. Entsprechend tritt eine Spannungsspitze auf. Der Kondensator gibt also den Anstieg der Spannung am Schaltungseingang bzw. Schaltungsausgang an den Schalteingang des Schalterbauteils weiter und wirkt somit als Differenzierer. Auch beliebige andere Varianten von Differenzierern können anstatt des Kondensators verwendet werden, um ein Rückkoppelsignal zu erzeugen. Es können jedoch auch andere Mittel als ein Differenzierer zur Erzeugung eines Rückkoppelsignals verwendet werden. Beispielsweise könnte ein Operationsverstärker hierzu verwendet werden. Dieser würde dann mit einem seiner Eingänge mit dem Schaltungseingang bzw. Schaltungsausgang und mit seinem Ausgang mit dem Schalteingang des Schalterbauteils verbunden werden.

Besonders bevorzugt ist zumindest bei auf Unterbrechung geschaltetem Schalterbauteil keinerlei ohmsche Last zum Schalterbauteil parallel geschaltet. Die mit dem Schaltungseingang verbundene Startschaltung stellt somit zumindest bei auf Unterbrechung geschaltetem Schalterbauteil (bzw. dann, wenn die Startschaltung nicht ausgangsseitig mit dem Potential verbunden ist) vorzugsweise keine ohmsche Last, sondern eine reine Wechselspannungslast dar. Der Widerstand der Startschaltung ist vorzugsweise frequenzabhängig. Für Gleichspannungen ist der Widerstand vorzugsweise im Wesentlichen unendlich, sodass bei gleichbleibender, unter dem Referenzwert liegender Spannung am Schaltungseingang kein Stromfluss stattfindet. Durch den im Wesentlichen unendlichen Widerstand gegenüber einer konstanten Spannung am Schaltungseingang wird ein Stromverbrauch bei Trennung des Schaltungseingangs vom Schaltungsausgang zuverlässig vermieden bzw. auf Situationen, bei denen sich die am Schaltungseingang anliegende Spannung ändert, beschränkt.

Die Schaltung kann zusätzlich einen Spannungsregler oder -begrenzer umfassen, der eine dem Steuerkreis über den Versorgungseingang zugeführte Spannung regelt und/oder eine Überspannung verhindert. Außerdem umfasst das elektrische Gerät einen Energiespeicher, nämlich eine interne Batterie, einen Anschluss für eine externe Energieversorgung sowie einen Versorgungspfadumschalter, der sowohl mit dem Energiespeicher als auch mit dem Anschluss für die externe Energieversorgung verbunden ist und wahlweise den Energiespeicher oder den Anschluss für die externe Energieversorgung mit dem Schaltungseingang verbindet. Der Versorgungspfadumschalter kann weitere Eingänge aufweisen, die mit weiteren Energiequellen verbunden sind. Das wahlweise Verbinden kann insbesondere abhängig von der Spannung des Energiespeichers oder einem zugeführten Signal erfolgen.

Besonders bevorzugt können der Energiespeicher und der Anschluss für die externe Energieversorgung (und gegebenenfalls die weiteren Eingänge) mit verschiedener Priorität behandelt werden. Insbesondere kann der Anschluss für die externe Energieversorgung immer dann mit dem Schaltungseingang verbunden werden, wenn die Spannung am Anschluss der externen Energieversorgung hinreichend hoch ist. Nur wenn die Spannung am Anschluss für die externe Energieversorgung zu niedrig ist, wird der Energiespeicher mit dem Schaltungseingang verbunden, so dass die Ladung des Energiespeichers nur dann verbraucht wird, wenn gerade keine hinreichende Spannung am Anschluss der externen Energieversorgung vorhanden ist.

Das elektrische Gerät kann insbesondere als Mautgerät oder als Tachograph ausgebildet sein. Es ist vorteilhaft auch denkbar, dass das Mautgerät ergänzend die Funktionalität eines Tachographen aufweist oder dass der Tachograph ergänzend die Funktionalität eines Mautgeräts aufweist. Insbesondere kann das elektrische Gerät eine Onboard-Unit eines Fahrzeugs darstellen.

Das elektrische Gerät kann, wenn es in einem Fahrzeug eingebaut ist, mit seinem Anschluss für die externe Energieversorgung mit der Fahrzeugbatterie verbunden sein. Insbesondere kann die Verbindung über die gemäß DIN 72552 als Klemme 30 bezeichnete Verbindungsstelle erfolgen.

Ausführungsbeispiele der Erfindung werden nachfolgend anhand schematisierter Figuren näher erläutert. Es zeigt:
- Fig. 1: eine schematische Darstellung einer erfindungsgemäßen Schaltanordnung, nach einem Ausführungsbeispiel,
- Fig. 2: eine Darstellung einer schaltungstechnischen Umsetzung der Schaltungsanordnung aus Fig. 1,
- Fig. 3: einen Ausschnitt der Schaltung aus Fig. 2 mit innerhalb der Schaltung markierten Punkten,
- Fig. 4: Spannungsverläufe für einen Ein- und Ausschaltvorgang an den markierten Punkten aus Fig. 3 bei einem ein durchgehendes Signal ausgebenden Mikrocontroller,
- Fig. 5: Spannungsverläufe für einen Ein- und Ausschaltvorgang an den markierten Punkten aus Fig. 3 bei einem gepulst arbeitenden Mikrocontroller und
- Fig. 6: Strom- bzw. Spannungsverläufe an den markierten Punkten aus Fig. 3 für einen Einschaltvorgang.

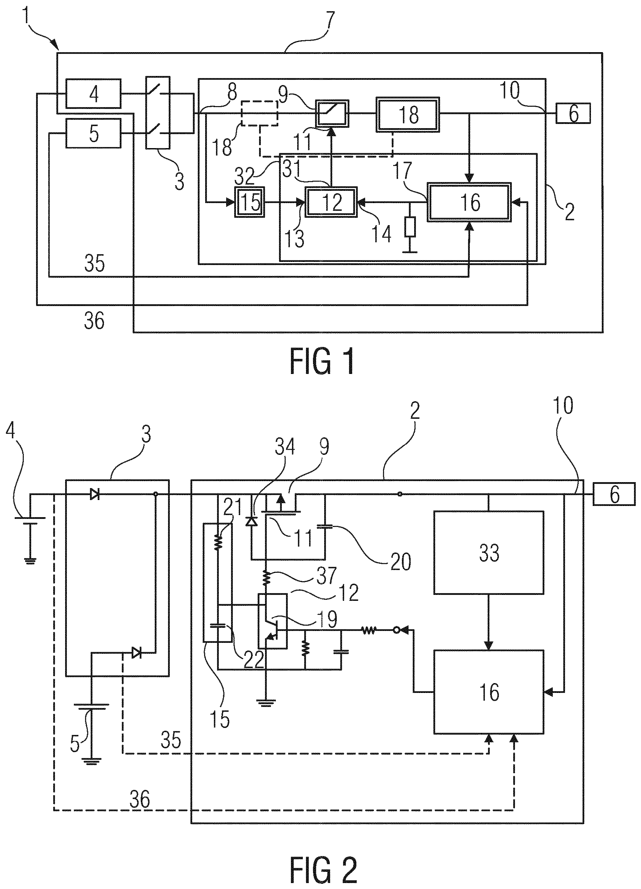

In Figur 1 ist eine Schaltanordnung 1 dargestellt, umfassend eine Schaltung 2 sowie einen der Schaltung vorgeschalteten Versorgungspfadumschalter 3 zur Verbindung von einer von zwei Energiequellen 4, 5 mit der Schaltung 2 sowie einem Verbraucher 6.

Die erste Energiequelle 4 ist als interne Batterie ausgebildet und kann zusammen mit der Schaltung 2, dem Versorgungspfadumschalter 3 und dem Verbraucher 6 in einem Gehäuse angeordnet sein, so dass diese Bestandteile zusammen ein elektrisches Gerät 7 bilden. Dieses elektrische Gerät ist im vorliegenden Ausführungsbeispiel ein Mauterfassungsgerät. Die zweite Energiequelle 5 kann beispielsweise als Fahrzeugbatterie ausgebildet sein, die über die für den Anschluss von Verbrauchern vorgesehene Klemme (üblicherweise als "Klemme 30" bezeichnet) mit dem Gerät 7 verbunden ist.

Der Versorgungspfadumschalter 3 ist dazu ausgebildet, die zweite Energiequelle 5 immer dann mit dem Gerät 2 zu verbinden, wenn diese eine hierfür hinreichende Ausgangsspannung ausgibt. Fällt die Ausgangsspannung der zweiten Energiequelle 5 hingegen unter die zur Versorgung der Schaltung 2 notwendige Spannung ab, verbindet der Versorgungspfadumschalter 3 die erste Energiequelle 4 mit der Schaltung 2. Die Ausgangsspannung der vom Versorgungspfadumschalter 3 ausgewählten Energiequelle wird somit mit dem Eingang 8 der Schaltung 2 verbunden.

Die Schaltung 2 weist ein Schalterbauteil 9, eine Startschaltung 15, einen Steuerkreis 32 umfassend eine Vergleichsschaltung 16 und eine Verknüpfungsschaltung 12, sowie eine Schutzschaltung 18 auf, die beispielsweise als Überstromschutz ausgebildet sein kann. In die Schutzschaltung 18 kann ein Überspannungsschutz integriert sein. Die Schutzschaltung 18 kann wie dargestellt hinter dem Schalterbauteil 9 angeschlossen sein. Alternativ kann die Schutzschaltung jedoch auch - wie gestrichelt dargestellt - vor dem Schalterbauteil 9 angeordnet sein. Die Schutzschaltung kann ein Schutz vor Überspannung und/oder Überstrom direkt selbst realisieren oder einen entsprechenden Schutz durch Zuführen eines Signals an den Steuereingang 11 des Schalterbauteils 9 (wie durch die gestrichelten Linien dargestellt) ermöglichen. Ebenso kann ein zusätzlicher Überspannungsschutz zwischen dem Schalterbauteil 9 und dem Versorgungspfadumschalter 3 vorgesehen sein.

Das Schalterbauteil 9 verbindet den Eingang 8 wahlweise mit einem Ausgang 10 der Schaltung 2 oder trennt den Eingang 8 vom Ausgang 10. Ob das Schalterbauteil sperrt oder auf Durchgang schaltet, hängt von einer am Steuereingang 11 des Schalterbauteils 9 anliegenden Spannung bzw. von dem dem Steuereingang 11 zugeführten Steuersignal ab. Je nach Ausgestaltung des Schalterbauteils 9 kann der Schaltzustand des Schalterbauteils auch von der Differenz zwischen der am Steuereingang 11 anliegenden Spannung und der Spannung am Eingang 8 abhängen.

Der Steuereingang 11 des Schalterbauteils 9 ist mit einem Ausgang der Verknüpfungsschaltung 12 verbunden die mit dem Mikrocontroller 16 und der Startschaltung 15 verbunden ist. Die Verknüpfungsschaltung 12 gibt über ihren Ausgang 31 ein Signal aus, das von den an ihren Eingängen 13, 14 anliegenden Spannungen abhängt.

Der erste Eingang 13 der Verknüpfungsschaltung 12 ist mit der als Verzögerungsschaltung ausgebildeten Startschaltung 15 verbunden, die die am Eingang 8 anliegende Spannung verzögert bzw. geglättet an das Schaltungsteil 12 weiterleitet.

Der zweite Eingang 14 hingegen ist mit dem Mikrocontroller 16 verbunden. Der Mikrocontroller vergleicht - wenn er bereits zum Aufnehmen des Betriebs hinreichend lange mit einer Spannung versorgt wurde - eine Spannung am Ausgang 10 mit einem Referenzwert und gibt über seinen Ausgang 17 ein Signal aus, das davon abhängt, ob die Spannung am Ausgang 10 über oder unter dem Referenzwert liegt. Alternativ hierzu kann auch eine dem Mikrocontroller 16 vorgeschalteter Vergleichsschaltung die Spannung am Ausgang 10 mit dem Referenzwert vergleichen und ein dem Ergebnis dieses Vergleichs entsprechendes Signal an den Mikrocontroller 16 ausgeben. Der Mikrocontroller gibt dann - wie in Ausführungsformen, in denen der Mikrocontroller den Vergleich selbst durchführt - ein entsprechendes Signal über seinen Ausgang 17 aus. Eine dem Mikrocontroller vorgeschaltete Vergleichsschaltung kann beispielsweise in einen Spannungsregler integriert sein, der die Versorgungsspannung für den Mikrocontroller bereitstellt.

Der Referenzwert ist so gewählt, dass bei einem darunterliegenden Spannungswert die mit der Schaltung 2 verbindbaren Energiequellen 4 und 5 keine hinreichende Spannung mehr liefern, so dass eine Tiefentladung der Energiequelle droht. Eine über dem Referenzwert liegende Spannung am Ausgang 10 stellt hingegen sicher, dass die mit der Schaltung 2 verbundene Energiequelle 4 oder 5 eine hinreichende Ausgangsspannung ausgibt, so dass davon ausgegangen werden kann, dass die jeweilige Energiequelle noch hinreichend geladen ist. Solange der Mikrocontroller 16 noch nicht mit einer Versorgungsspannung versorgt wird und somit den Betrieb noch nicht aufnehmen kann, gibt er eine Spannung von 0 Volt aus. Stellt er fest, dass die Spannung am Ausgang 10 zu niedrig ist, gibt er ebenfalls eine Spannung von 0 Volt aus. Stellt er hingegen fest, dass die Spannung am Ausgang 10 den Referenzwert übersteigt, gibt er (je nach Ausgestaltung des Mikrocontrollers 16 durchgehend oder gepulst) eine von 0 Volt verschiedene Spannung aus.

Wenn der Mikrocontroller eine von 0 Volt verschiedene Spannung ausgibt, führt die Verknüpfungsschaltung 12 dem Schalteingang 11 ein Steuersignal zu, das das Schalterbauteil auf Durchgang schaltet. Führt der Mikrocontroller der Verknüpfungsschaltung 12 hingegen eine Spannung von 0 Volt zu, gibt die Verknüpfungsschaltung 12 ein Ausgangssignal der Startschaltung 15 an den Schalteingang 11 aus.

Wie bereits erwähnt schaltet das Schalterbauteil 9 abhängig von der Spannung am Schaltungseingang und/oder der Spannungsdifferenz zwischen der Spannung am Schaltungseingang 8 und der Spannung am Schalteingang 11. In einer möglichen Ausgestaltung schaltet das Schalterbauteil 9 durch, wenn die Spannung am Schaltungseingang 8 im hinreichenden Maße größer ist, als die Spannung am Schalteingang 11 und sperrt, wenn die Spannungsdifferenz zu klein ist. In einer weiteren möglichen Ausgestaltung schaltet das Schalterbauteil 9 durch, solange die Spannung am Schalteingang 11 unterhalb eines vorgegebenen Werts liegt, und sperrt, sobald sie diesen vorgegebenen Wert überschreitet. Wie groß die Spannungsdifferenz zwischen Schalteingang 11 und Schaltungseingang 8 bzw. wie groß die Spannung am Schalteingang 11 sein muss, damit das Schalterbauteil durchschaltet, ist von der Wahl des Schalterbauteils abhängig. Über die Wahl des Schalterbauteils 11 und der Ausgestaltung der Startschaltung 15 (insbesondere hinsichtlich ihrer Verzögerung- bzw. Glättungswirkung) kann somit das Zeitfenster festgelegt werden, für dass das Schalterbauteil 9 unabhängig von der Spannung am Schaltungsausgang 10 und unabhängig von der Funktion des Mikrocontrollers 16 durchschaltet, wenn die Spannung am Schaltungseingang 8 plötzlich ansteigt.

Hierdurch wird vorzugsweise erreicht, dass das Schalterbauteil 9 beim Verbinden einer neuen Energiequelle 4 oder 5 mit der Schaltung 2 (unter der Bedingung, dass die Spannung der Energiequelle hierfür hinreichend groß ist) zunächst durchschaltet, da die Startschaltung 15 im entsprechenden Zeitbereich noch eine niedrige Spannung ausgibt, so dass in diesem Zeitbereich die Spannung am Schalteingang 11 niedrig und die Spannungsdifferenz zwischen der Spannung am Schaltungseingang 8 und der Spannung am Schalteingang 11 hoch ist. Hierdurch wird beim Verbinden einer neuen Energiequelle 4 bzw. 5 die zur Versorgung des Mikrocontrollers 16 notwendige Spannung vom Schalterbauteil 9 durchgelassen, bis der Mikrocontroller die am Schaltungsausgang 10 anliegende Spannung und somit die Spannung der mit der Schaltung 2 verbundenen Energiequelle 4 bzw. 5 daraufhin untersuchen kann, ob sie über oder unter dem Referenzwert liegt. Dieses zeitweise Aktivieren des Mikrocontrollers bei ansteigender Spannung am Schaltungseingang wird auch als Bootstrapping bezeichnet.

Zusätzlich zu den bisher näher beschriebenen Komponenten umfasst die Schaltung 2 noch die eingangs erwähnten Schutzschaltung 18, deren einzige Funktion der Schutz des Mikrocontrollers 16 und des Verbrauchers 6 ist.

Eine konkrete schaltungstechnische Ausgestaltung der in Fig. 1 schematisch erläuterten Schaltungsanordnung 1 ist in Figur 2 dargestellt. In dieser schaltungstechnischen Ausgestaltung wird als Schalterbauteil 9 ein MOSFET verwendet. Wie zu erkennen ist, wird die als Verzögerungsschaltung ausgebildete Startschaltung 15 durch einen Widerstand 21 und einen mit der Masse verbundenen Kondensator 22, d. h. durch einen Tiefpass, gebildet. Die Verknüpfungsschaltung 12 weist einen Transistor 19 auf, dessen Kollektor den Eingang 13 der Verknüpfungsschaltung bildet, und zugleich mit dem Schalteingang 11 des Schalterbauteils 9 verbunden ist. Ist der Transistor 19 gesperrt, liegt somit am Ausgang der Verknüpfungsschaltung 12 die Spannung des Kondensators der Startschaltung 15 an. Ist der Transistor 19 hingegen durch geschaltet, verbindet er über seine Kollektor-Emitter Strecke die Masse mit dem Schalteingang 11 des Schalterbauteils 9. Selbstverständlich könnte statt dem Transistor 19 auch ein anderes Schaltelement verwendet werden.

In einem Anfangszustand der Schaltung, in dem der Schaltungseingang 8 mit einer konstanten, unter dem Referenzwert liegenden Spannung verbunden ist, sperrt das Schalterbauteil 9. Am Schaltungsausgang 10 liegt keine Spannung an, so dass der Mikrocontroller 16, der über einen Spannungsregler 33 mit Schaltungsausgang 10 verbunden ist, nicht mit einer Versorgungsspannung versorgt wird und daher eine Spannung von 0 Volt ausgibt. Entsprechend sperrt der Transistor 19 und dem Schalterbauteil 9 wird das Ausgangssignal der Startschaltung 15 - welches zu dem Zeitpunkt der Eingangsspannung entspricht - zugeführt. Die Spannungsdifferenz zwischen Schaltungseingang 8 und Schalteingang 11 (d. h. die Gate-Source-Spannung des MOSFETs) beträgt somit 0 Volt, wodurch das Schalterbauteil 9 gesperrt bleibt.

Steigt die Spannung am Schaltungseingang 8 ausgehend von diesem Anfangszustand an, wird der Anstieg der Spannung durch die Startschaltung nur verzögert an die den Steuereingang 11 weitergegeben, weshalb die Spannungsdifferenz (Gate-Source Spannung) ansteigt und das Schalterbauteil 9 durchschaltet. Hierdurch wird der Mikrocontroller zeitweise (nämlich bis die Spannung am Schalteingang 11 zu weit ansteigt bzw. die Gate-Source Spannung zu gering wird) mit Spannung versorgt und beginnt, die Spannung am Schaltungsausgang (welche aufgrund des auf Durchgang geschalteten Schalterbauteils 9 gleich der Spannung am Schaltungseingang ist) mit dem Referenzwert zu vergleichen. Zusätzlich oder alternativ zum Vergleichen der Spannung am Schaltungsausgang mit dem Referenzwert kann der Mikrocontroller 16, wie durch die Pfeile 35 und 36 angedeutet, auch die Spannung direkt an den Energiequellen 4, 5 prüfen bzw. mit dem Referenzwert vergleichen. Das stufenweise Aktivieren des Mikrocontrollers 16 durch die Startschaltung 15 wird auch als Bootstrapping bezeichnet.

Stellt der Mikrocontroller eine über dem Referenzwert liegende Spannung fest, wird der Transistor 19 über seine Basis bzw. seine Steuerelektrode von dem Mikrocontroller 16 derart gesteuert, dass er (je nach Ausgestaltung des Mikrocontrollers) durchgehend öffnet oder gepulst betrieben wird, d. h. er öffnet und sperrt impulsweise. Immer dann, wenn der Transistor 19 öffnet, wird der Kondensator 22 entladen. Bei gepulstem Betrieb geschieht dies vorzugsweise in regelmäßigen Abständen, die so gewählt sind, dass die Spannung am Schalteingang 11 zwischen den Entladevorgängen nicht hinreichend stark ansteigt, damit die Spannungsdifferenz bzw. Gate-Source Spannung unter die entsprechende Schaltschwelle des Schalterbauteils 9 abfällt. Das Schalterbauteil 9 bleibt sowohl bei einem durchgehenden als auch bei einem gepulsten Betrieb des Transistors 19 so lange auf Durchlass geschaltet, bis die Spannung am Schaltungseingang unter den Referenzwert fällt.

Stellt der Mikrocontroller 16 fest, dass die Spannung am Schaltungsausgang 10 unter dem vorgegebenen Grenzwert liegt, wird der Transistor 19 durchgehend auf Sperren geschaltet. Die Spannung am Schalteingang steigt daher an, bis die Spannungsdifferenz zwischen Schaltungseingang 8 und Schalteingang 11 zu klein ist, um das Schalterbauteil 9 im auf Durchgang geschalteten Zustand zu halten. Da dies vorzugsweise zumindest einige Millisekunden (vorzugsweise zwischen einer Millisekunde und einer Sekunde) dauert, führen auch kurzzeitige Schwankungen am Schaltungseingang nicht direkt dazu, dass das Schalterbauteil auf Sperren schaltet.

Nicht in der Fig. 1 zu erkennen ist ein in Fig. 2 dargestellter, durch einen Kondensator 20 realisierter Schutz vor einem zu hohen Einschaltstrom. Der Kondensator 20 gibt einen Spannungsanstieg an seiner zum Schaltungsausgang 10 weisenden Seite an den Schalteingang 11 des Schalterbauteils 9 weiter und wirkt somit als Differenzierer. Ist ein Strom beim Einschalten so hoch, dass er entweder für den Mikrocontroller 16 oder für den Verbraucher 6 gefährlich wäre, steigt die auf der dem Schalteingang 11 zugewandten Seite des Kondensators 20 vorliegende Spannung unmittelbar nach dem Durchschalten des Schalterbauteils 9 schnell genug an, damit die Leitfähigkeit des Schalterbauteils 9 sinkt bevor ein Schaden am Mikrocontroller 16 oder Verbraucher 6 entstehen kann. Nach dem Einschaltvorgang hingegen verschwindet die Wirkung des Kondensators 20, da die zum Schalteingang 11 weisende Seite des Kondensators 20 über den Transistor 19 mit der Masse verbunden wird. Weiterhin zusätzlich zu den in Figur 1 dargestellten Teilen ist in Fig. 2 eine Diode 34, die als Überspannungsschutz für die Gate-Source Spannung vom Schalterbauteil 9 dient.

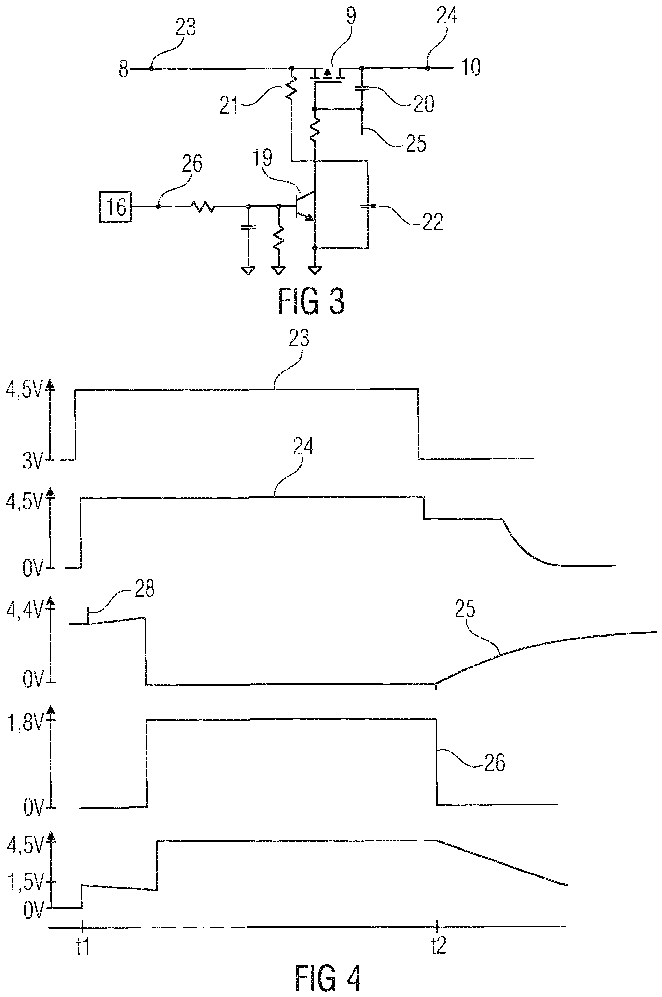

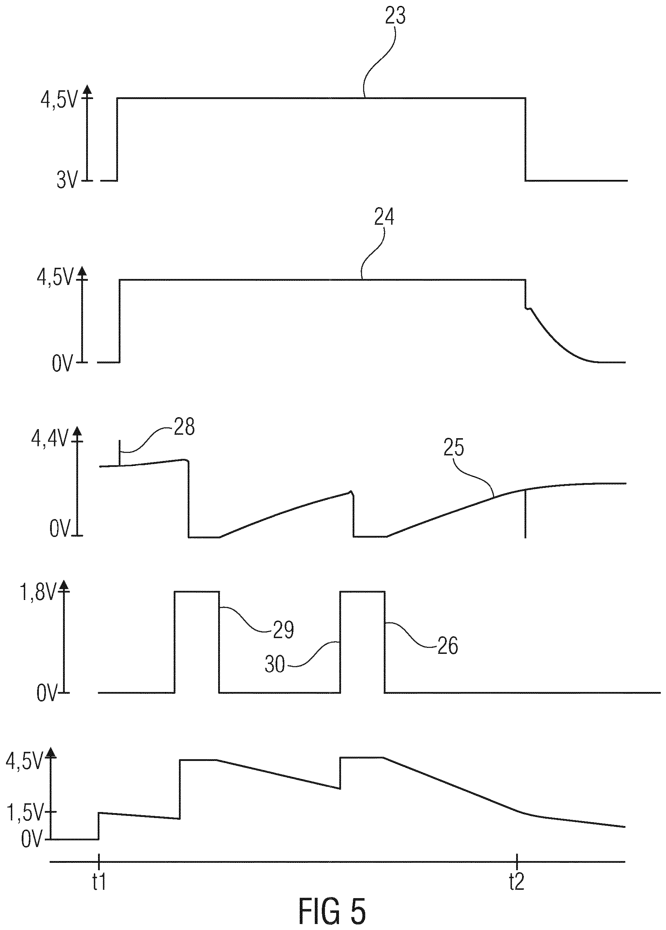

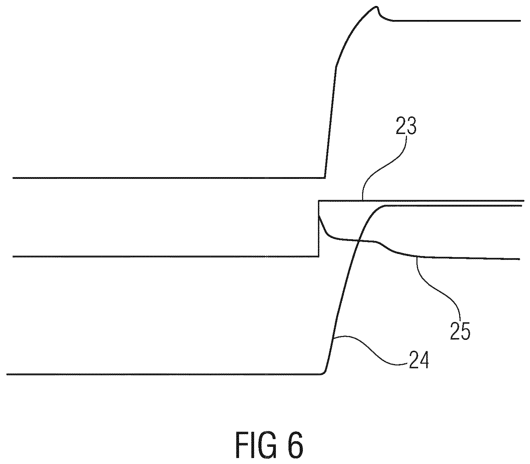

In Figur 3 ist ein Ausschnitt der Schaltungsanordnung aus Fig. 2 dargestellt. Gleiche Bauteile sind hierbei mit gleichen Bezugszeichen versehen. Zusätzlich zu den bereits aus Fig. 2 bekannten Bauteilen sind in Fig. 3 Punkte 23, 24, 25 und 26 markiert. In den folgenden Figuren 4 bis 6 sind für eine Simulation der vorangehend beschriebenen Schaltung simulierte Spannungsverläufe an den markierten Punkten dargestellt. Die Fig. 4 bezieht sich hierbei auf Ausführungsformen, bei denen der Mikrocontroller ein durchgehendes Signal ausgibt, während sich Fig. 5 auf Ausführungsformen mit einem gepulst arbeitenden Mikrocontroller bezieht. Die Figur 6 zeigt lediglich einen Einschaltvorgang, wobei dieser unabhängig davon abläuft, ob der Mikrocontroller gepulst oder durchgehend arbeitet. Die Graphen sind jeweils mit dem Bezugszeichen versehen, das dem jeweiligen markierten Punkt aus Fig. 3 entspricht, an dem die durch den jeweiligen Graph aufgetragene Spannung anliegt. Der Graph 23 stellt somit einen Spannungsverlauf am Eingang 8, der Graph 24 einen Spannungsverlauf am Ausgang 10, der Graph 25 einen Spannungsverlauf am Gate bzw. Schalteingang 11 des Schalterbauteils 9 und der Graph 26 ein vom Mikrocontroller 16 ausgegebenes Signal dar. Der Graph 27 hingegen zeigt die Spannungsdifferenz zwischen der Spannung am Eingang 8 und der Spannung am Schalteingang 11.

In Fign. 4 und 5 sind die Spannungsverläufe für einen simulierten Ein- und Ausschaltvorgang dargestellt wie er vorangehend prinzipiell anhand von Figur 2 bereits beschrieben wurde. Zu Beginn befindet sich die Schaltung im oben beschriebenen Anfangszustand. Die Spannung 23 am Schaltungseingang 8 sowie die Spannung 25 am Schalteingang 11 beträgt 3 Volt. Die Gate-Source Spannung 27 beträgt entsprechend 0 Volt. Da das Schalterbauteil 9 sperrt, beträgt die Schaltung am Schaltungsausgang 10 0 Volt.

Zu einem Zeitpunkt t₁ steigt die am Eingang 8 anliegende Spannung von einem Wert von 3 Volt plötzlich auf etwa 4,5 Volt an (vgl. Graph 23). Dies kann beispielsweise daraus resultieren, dass durch den Versorgungspfadumschalter 3 von der ersten Energiequelle 4 auf die zweite Energiequelle 5 geschaltet wird.

Wie anhand des Graphen 25 zu erkennen ist, steigt die Spannung am Schalteingang 11 des Schalterbauteils 9 nur langsam an. Entsprechend steigt die Gate-Source Spannung 27 kurzzeitig auf 1,5 Volt, was zum Schalten des Schalterbauteils 9 und somit zum Anstieg der Spannung am Schaltungsausgang von 0 Volt auf 4,5 Volt führt. Unmittelbar nach dem Schalten des Schalterbauteils 9 und dem dadurch verursachten Anstieg der Spannung 24 am Schaltungsausgang 10 ist eine Spannungsspitze 28 zu erkennen.

Diese Spannungsspitze ist darauf zurückzuführen, dass der Kondensator 20 aufgrund der am Ausgang 10 anliegenden Spannung geladen wird. Das Aufladen der dem Ausgang 10 zugewandten Seite des Kondensators 20 hat zur Folge, dass die entgegengesetzte, dem Schalteingang 11 des Schaltelements 9 zugewandte Seite des Kondensators 20 eine Ladung mit umgekehrtem Vorzeichen anstrebt. Entsprechend wird ein Stromfluss über einen Widerstand 37 hervorgerufen, so dass eine Spannung über den Widerstand 37 abfällt und sich somit das am Schalteingang 11 anliegende Potenzial entsprechend ändert, wie es anhand der Spannungsspitze 28 zu erkennen ist. Der Kondensator wirkt somit als Differenzierer. Durch diese Rückkopplung der Spannung am Eingang 10 auf den Schalteingang 11 wird wie bereits erwähnt ein maximaler Einschaltstrom begrenzt, wodurch nachfolgende Bauteile, insbesondere der Verbraucher 6 und der Mikrocontroller 16, wie vorangehend beschrieben geschützt werden.

Nach der Spannungsspitze 28 zeigt die Spannung am Gate 25 einen kontinuierlichen Anstieg, der darauf zurückzuführen ist, dass der Kondensator 22 der Startschaltung 15 geladen wird.

Anhand des Graphen 26 ist zu erkennen, dass die am Ausgang 10 anliegende Spannung, welche aufgrund des auf Durchgang geschalteten Schalterbauteils 9 der Spannung am Schaltungseingang 8 entspricht, vom Mikrocontroller 16 als hinreichend groß bewertet wird. Wie bereits erwähnt, kann der Mikrocontroller jedoch auch, wie durch die Pfeile 35 und 36 dargestellt, die Spannung direkt an den Energiequellen 4, 5 bestimmen und diese mit dem Referenzwert vergleichen. Aufgrund der über dem Referenzwert liegenden Spannung gibt der Mikrocontroller 16 ein durchgehendes Signal (dargestellt in Figur 4) oder Rechteck-Pulse 29 und 30 (dargestellt in Figur 5, selbstverständlich sind auch andere Pulsformen möglich) aus, die anzeigen, dass die Spannung am Ausgang 10 hinreichend groß ist und dass somit keine Tiefentladung des mit der Schaltung verbundenen Energiespeichers 4 oder 5 droht.

Das durchgehende Signal bzw. die Rechteck-Pulse 29 und 30 werden über einen nicht mit Bezugszeichen versehenen Tiefpass an die Basis des Transistors 19 weitergeleitet. Diese Spannung bewirkt, dass der Transistor 19 kurzzeitig oder durchgehend (abhängig davon, ob der Mikrocontroller ein gepulstes oder ein durchgehendes Signal ausgibt) auf Durchgang schaltet. Hierdurch wird der Kondensator 22 mit seiner zum Schalteingang 11 des Schalterbauteils 9 weisenden Seite über die Kollektor-Emitter Strecke mit Masse verbunden und vollständig entladen. Entsprechend fällt die Spannung am Schalteingang 11 auf null (also dem Potential der Masse) bzw. einen Wert nahe null ab.

In Varianten mit einem gepulst arbeitenden Mikrocontroller (vgl. Fig. 5) steigt nach dem ersten Rechteck-Puls 29 die Spannung am Schalteingang 11 langsam wieder an, wobei der Transistor 19, deutlich bevor die Spannung am Schalteingang 11 die zum Schalten des Schalterbauteils 9 notwendige Spannung überschreitet, durch den zweiten Rechteck-Puls 30 wieder durchgeschaltet wird, so dass der Kondensator 22 erneut vollständig entladen wird. Bei Varianten mit durchgehend arbeitendem Mikrocontroller hingegen bleibt die Spannung am Schalteingang in dem gesamten Zeitbereich konstant, in dem der Mikrocontroller eine über dem Referenzwert liegende Spannung feststellt.

Zu einem Zeitpunkt t₂ fällt die am Eingang anliegende Spannung erneut auf 3 V ab. Diese Spannung ist niedriger als der Referenzwert. Bei einem durchgehend arbeitenden Mikrocontroller sinkt die vom Mikrocontroller ausgegebene Spannung auf 0 V. Bei Varianten mit gepulst arbeitendem Mikrocontroller 16 werden keine weiteren Rechteck-Pulse vom Mikrocontroller 16 ausgegeben. Sowohl bei einem durchgehend als auch bei einem gepulst arbeitenden Mikrocontroller 16 nähert sich die Spannung am Schalteingang 11 der Spannung am Eingang 8 an. Da im vorliegenden Fall das Schalterbauteil 9 als MOSFET ausgebildet ist, führt dies dazu, dass der Widerstand des Schalterbauteils 9 rapide ansteigt, wodurch die am Ausgang 10 anliegende Spannung schnell abfällt.

In Fig. 6 ist der Einschaltvorgang zeitlich deutlich detaillierter als in den Fign. 4 und 5 dargestellt. Während der in Fig. 4 dargestellte Zeitabschnitt insgesamt etwa 1,4 Sekunden lang ist, ist in Fig. 5 lediglich ein Zeitabschnitt von knapp 3,5 Millisekunden, in denen der Einschaltvorgang stattfindet, dargestellt. Selbstverständlich hängen die genauen Zeiten von der Ausgestaltung der Schaltung ab und können je nach Ausführungsform länger oder kürzer sein. Wie zu erkennen ist, steigt die am Schalteingang 11 anliegende Spannung (vgl. Graph 25) durch die Rückkopplung über den Kondensator 20 beim Erhöhen der am Eingang anliegenden Spannung (vgl. Graph 23) sprunghaft an. Anschließend sinkt die durch den Graphen 25 dargestellte Spannung nahezu wieder auf den Ausgangswert, um dann einen in diesem Zeitabschnitt nicht zu erkennenden, jedoch bereits anhand von Fig. 4 beschriebenen langsamen kontinuierlichen Anstieg zu vollziehen. Durch das kurzzeitige Ansteigen der Spannung am Eingang 11 wird ein Anstieg der Spannung am Ausgang 10 (vgl. Graph 24) geringfügig verzögert.

Oben in Fig. 5 ist der durch das Schalterbauteil 9 fließende Strom aufgetragen. Wie zu erkennen ist, steigt der Strom langsamer an, als die Spannung am Schaltungseingang. Der verzögerte Anstieg ist auf das Kopplungssignal des Kondensators 20 (d. h. die Spannungsspitze 28) zurückzuführen, durch die eine Leitfähigkeit des Schalterbauteils reduziert wird, da die Spannungsspitze 28 die Gate-Source Spannung 27 auf einen Wert nahe der Schaltschwelle des Schalterbauteils 9 reduziert.

## Patentansprüche

1. Elektrisches Gerät (7), umfassend:
- eine Schaltung (2) zur Verbindung mit einer ersten Energiequelle (4) oder mit einer zweiten Energiequelle (5) sowie zur Steuerung einer Verbindung zwischen einem Schaltungseingang (8) und einem Schaltungsausgang (10) abhängig von einer am Schaltungseingang (8) anliegenden Spannung (23), umfassend:
- ein Schalterbauteil (9), das mit dem Schaltungseingang (8) und dem Schaltungsausgang (10) verbunden ist und einen Schalteingang (11) aufweist, und das dazu ausgebildet ist, abhängig von einem am Schalteingang (11) anliegenden Steuersignal (25) auf Durchgang oder Unterbrechung zu schalten und
- einen Steuerkreis (32), der dazu ausgebildet ist, dem Schalteingang (11) des Schalterbauteils (9) dann ein Steuersignal (25) zum Schalten des Schalterbauteils (9) auf Durchgang zuzuführen, wenn die am Schaltungsausgang (10) anliegende Spannung über einem Referenzwert liegt, und dann ein Steuersignal zum Schalten des Schalterbauteils (9) auf Unterbrechung zuzuführen, wenn die am Schaltungsausgang (10) anliegende Spannung unter dem Referenzwert liegt,
wobei der Steuerkreis (32) mit dem Schaltungsausgang (10) verbunden ist, derart, dass die Spannungsversorgung des Steuerkreises (32) abhängig von der Spannung am Schaltungsausgang (10) realisiert wird und
wobei mit dem Schaltungseingang (8) eine Startschaltung (15) verbunden ist, die dazu ausgebildet ist, abhängig von einem Spannungsanstieg am Schaltungseingang (8), das Schalterbauteil (9) auch dann auf Durchgang zu schalten, wenn der Steuerkreis (32) nicht über den Schaltungsausgang (10) mit Spannung versorgt wird, wobei die Schaltung (2) ferner umfasst Begrenzungsmittel (20) zum Begrenzen eines Einschaltstromes, die dazu ausgebildet sind, zumindest zeitweise eine Leitfähigkeit des Schalterbauteils (9) abhängig von einer Spannung (24) am Schaltungsausgang (10) und/oder Schaltungseingang (8) zu reduzieren, und zwar derart, dass das Begrenzungsmittel (20) Koppelmittel umfasst, die zum Ausgeben eines Kopplungssignals an den Schalteingang (11) zwischen den Schaltungseingang (8) und den Schalteingang (11) oder zwischen den Schaltungsausgang (10) und Schalteingang (11) geschaltet sind, und wobei der Steuerkreis (32) eine Vergleichsschaltung zum Vergleichen einer von der am Schaltungseingang anliegenden Spannung abhängigen Spannung, und zwar der Spannung am Schaltungsausgang (10), mit dem Referenzwert umfasst, wobei die Vergleichsschaltung als Mikrocontroller (16) ausgebildet ist, und wobei der Steuerkreis (32) eine mit der Startschaltung (15) verbundene Verknüpfungsschaltung (12) umfasst, die dazu ausgebildet ist,
- dann, wenn der Steuerkreis (32) eine über dem Referenzwert liegende Spannung am Schaltungseingang (8) erfasst, den Schalteingang (11) des Schalterbauteils (9) mit einem zumindest zeitweise das Steuersignal bildenden Potential zum auf Durchgang Schalten des Schalterbauteils (9) zu verbinden und
- dann, wenn der Steuerkreis (32) eine unter dem Referenzwert liegende Spannung erfasst oder wenn der Steuerkreis (32) mangels Spannungsversorgung keinen Vergleich der Spannung mit dem Referenzwert durchführt, dem Schalteingang (11) des Schalterbauteils (9) ein Ausgangssignal der Startschaltung (15) als Steuersignal zuzuführen, und wobei
die Verknüpfungsschaltung (12) ein Schaltelement, und zwar einen Transistor (19), umfasst, das einen Eingang, einen Ausgang sowie einen Steuereingang zum Steuern einer Verbindung zwischen dem Eingang und den Ausgang umfasst, wobei
- der Eingang mit dem Potential der Masse verbunden ist,
- der Ausgang sowohl mit der Startschaltung (15) als auch mit dem Schalteingang (11) des Schalterbauteils verbunden ist und
- der Steuereingang mit der Vergleichsschaltung (16) verbunden ist,
- mindestens eine interne Batterie (4) und mindestens einen Anschluss für eine Fahrzeugbatterie (5), wobei die interne Batterie die erste Energiequelle (4) und die Fahrzeugbatterie die zweite Energiequelle (5) ist,
- einen Versorgungspfadumschalter (3), der dazu ausgebildet ist, abhängig von einer Spannung am Anschluss der Fahrzeugbatterie (5), einer Spannung der internen Batterie (4) und/oder abhängig von einem zugeführten Signal die interne Batterie (4) oder den Anschluss für die Fahrzeugbatterie (5) mit dem Schaltungseingang (8) der Schaltung (2) zu verbinden.

2. Elektrisches Gerät (7) nach Anspruch 1, **dadurch gekennzeichnet , dass** die Startschaltung als eine Verzögerungsschaltung (15) zum verzögerten und/oder geglätteten Ausgeben einer am Schaltungseingang (8) anliegende Spannung (23) ausgebildet ist, wobei die Verzögerungsschaltung (15) vorzugsweise als Tiefpass ausgebildet ist.

3. Elektrisches Gerät (7)nach Anspruch 2, **dadurch gekennzeichnet , dass** die Verzögerungsschaltung und der Steuerkreis derart ausgebildet sind, dass die verzögerte und/oder geglättete Spannung zumindest zeitweise als Steuersignal an den Schalteingang (11) des Schalterbauteils weitergeleitet wird, und dass das Schalterbauteil (9) dazu eingerichtet ist, abhängig von einer Spannungsdifferenz (27) zwischen der Spannung am Schaltungseingang (8) und der Spannung am Schalteingang (11) zu schalten.

4. Elektrisches Gerät (7) nach einem der vorangehenden Ansprüche, **dadurch gekennzeichnet, dass** die Startschaltung (15) ein Speicherelement (22) umfasst und derart ausgebildet ist,
dass das Steuersignal dann, wenn die Verbindung zwischen dem Eingang und Ausgang des Schaltelements auf Durchgang geschaltet ist, dem Potential der Masse entspricht und dann, wenn das Schaltelement auf Unterbrechen geschaltet ist, einer Spannung des Speicherelements (22) entspricht, wobei das Speicherelement (22) dann, wenn es mit dem Potential verbunden ist, entladen wird und es dann, wenn das Schaltelement auf Unterbrechen geschaltet ist, über die Spannung am Schaltungseingang (8) geladen wird.

5. Elektrisches Gerät (7) nach einem der vorangehenden Ansprüche, **dadurch gekennzeichnet, dass** die Koppelmittel als Kondensator, Differenzierer und/oder Operationsverstärker ausgebildet sind.

6. Elektrisches Gerät (7) nach einem der vorangehenden Ansprüche, **dadurch gekennzeichnet, dass** das Schalterbauteil (9) als Transistor, vorzugsweise als MOSFET, ausgebildet ist.

7. Elektrisches Gerät (7) nach einem der vorangehenden Ansprüche, ausgebildet als Mautgerät oder Tachograph.

## Claims

1. An electrical device (7), comprising:
- a circuit (2) for connecting to a first energy source (4) or to a second energy source (5) and for controlling a connection between a circuit input (8) and a circuit output (10) depending on a voltage (23) applied to the circuit input (8), comprising:
- a switch component (9) that is connected to the circuit input (8) and the circuit output (10) and has a switching input (11), and that is designed to switch to pass-through or interruption depending on a control signal (25) applied to the switching input (11), and
- a control circuit (32) that is designed to feed a control signal (25) for switching the switch component (9) to pass-through to the switching input (11) of the switch component (9) if the voltage applied to the circuit output (10) is above a reference value, and then to supply a control signal for switching the switch component (9) to interruption if the voltage applied to the circuit output (10) is below the reference value,
wherein the control circuit (32) is connected to the circuit output (10) such that the voltage supply of the control circuit (32) is implemented depending on the voltage at the circuit output (10), and
wherein a starting circuit (15) is connected to the circuit input (8) and is designed to switch the switch component (9) to pass-through depending on a voltage rise at the circuit input (8) even if the control circuit (32) is not supplied with voltage via the circuit output (10), wherein
the circuit (2) further comprises limiting means (20) for limiting a switch-on current, which are designed to at least temporarily reduce a conductivity of the switch component (9) depending on a voltage (24) at the circuit output (10) and/or the circuit input (8), specifically in such a way that the limiting means (20) comprise coupling means which are connected to output a coupling signal to the switching input (11) between the circuit input (8) and the switching input (11) or are connected between the circuit output (10) and the switching input (11), and wherein
the control circuit (32) comprises a comparison circuit for comparing a voltage, dependent on the voltage applied to the circuit input, namely the voltage at the circuit output (10), with the reference value, wherein the comparison circuit is designed as a microcontroller (16), and wherein
the control circuit (32) comprises a linking circuit (12) which is connected to the starting circuit (15) and is designed,
- when the control circuit (32) detects a voltage above the reference value at the circuit input (8), to connect the switching input (11) of the switch component (9) to a potential which at least temporarily forms the control signal, for switching the switch component (9) to a pass-through, and
- when the control circuit (32) detects a voltage below the reference value or when the control circuit (32) does not compare the voltage with the reference value in the absence of a voltage supply, to feed an output signal of the starting circuit (15) as a control signal to the switching input (11) of the switch component (9), and wherein
the linking circuit (12) comprises a switching element, specifically a transistor (19), which comprises an input, an output, and a control input for controlling a connection between the input and the output, wherein
- the input is connected to the potential of ground,
- the output is connected both to the starting circuit (15) and to the switching input (11) of the switch component, and
- the control input is connected to the comparison circuit (16),
- at least one internal battery (4) and at least one terminal for a vehicle battery (5), wherein the internal battery is the first energy source (4) and the vehicle battery is the second energy source (5),
- a supply path changeover switch (3), which is designed to connect the internal battery (4) or the terminal for the vehicle battery (5) to the circuit input (8) of the circuit (2) depending on a voltage at the terminal of the vehicle battery (5), a voltage of the internal battery (4), and/or depending on a signal that is fed.

2. The electrical device (7) as claimed in claim 1, **characterized in that** the starting circuit is designed as a delay circuit (15) for delayed and/or smoothed output of a voltage (23) applied to the circuit input (8), wherein the delay circuit (15) is preferably designed as a low-pass filter.

3. The electrical device (7) as claimed in claim 2, **characterized in that** the delay circuit and the control circuit are designed such that the delayed and/or smoothed voltage is at least temporarily forwarded as a control signal to the switching input (11) of the switch component, and **in that** the switch component (9) is configured to switch depending on a voltage difference (27) between the voltage at the circuit input (8) and the voltage at the switching input (11).

4. The electrical device (7) as claimed in any one of the preceding claims, **characterized in that** the starting circuit (15) comprises a memory element (22) and is designed in such a way that,
the control signal, when the connection between the input and output of the switching element is switched to pass-through, corresponds to the potential of ground and, when the switching element is switched to interrupt, it corresponds to a voltage of the memory element (22), wherein the memory element (22), when it is connected to the potential, is discharged and, when the switching element is switched to interrupt, it is charged via the voltage at the circuit input (8).

5. The electrical device (7) as claimed in any one of the preceding claims, **characterized in that** the coupling means are designed as capacitors, differentiators, and/or operational amplifiers.

6. The electrical device (7) as claimed in any one of the preceding claims, **characterized in that** the switch component (9) is designed as a transistor, preferably as a MOSFET.

7. The electrical device (7) as claimed in any one of the preceding claims, designed as a toll device or tachograph.

## Revendications

1. Appareil électrique (7) comprenant :
- un circuit (2) pour la connexion à une première source d'énergie (4) ou à une seconde source d'énergie (5), ainsi que pour la commande d'une connexion entre une entrée de circuit (8) et une sortie de circuit (10) en fonction d'une tension (23) appliquée à l'entrée de circuit (8), comprenant :
- un composant de commutateur (9) qui est relié à l'entrée de circuit (8) et à la sortie de circuit (10) et qui présente une entrée de commutation (11) et qui est conçu pour commuter entre le passage ou l'interruption en fonction d'un signal de commande (25) appliqué à l'entrée de commutation (11), et
- un circuit de commande (32) conçu pour appliquer à l'entrée de commutation (11) du composant de commutateur (9) un signal de commande (25) pour commuter le composant de commutateur (9) en position de passage lorsque la tension appliquée à la sortie de circuit (10) est supérieure à une valeur de référence, puis pour appliquer un signal de commande pour commuter le composant de commutateur (9) en position d'interruption lorsque la tension appliquée à la sortie de circuit (10) est inférieure à la valeur de référence,
dans lequel le circuit de commande (32) est relié à la sortie de circuit (10), de sorte que l'alimentation électrique du circuit de commande (32) est réalisée en fonction de la tension à la sortie de circuit (10), et
dans lequel un circuit de démarrage (15) est relié à l'entrée de circuit (8) et est conçu pour, en fonction d'une augmentation de tension à l'entrée de circuit (8), commuter le composant de commutateur (9) en position de passage même si le circuit de commande (32) n'est pas alimenté en tension par la sortie de circuit (10), dans lequel
le circuit (2) comprend en outre un moyen de limitation (20) pour limiter un courant d'enclenchement, conçu pour réduire au moins temporairement une conductivité du composant de commutateur (9) en fonction d'une tension (24) à la sortie de circuit (10) et/ou à l'entrée de circuit (8), de sorte que le moyen de limitation (20) comprend des moyens de couplage qui sont commutés entre l'entrée de circuit (8) et l'entrée de commutation (11) ou entre la sortie de circuit (10) et l'entrée de commutation (11) pour délivrer un signal de couplage à l'entrée de commutation (11), et dans lequel
le circuit de commande (32) comprend un circuit de comparaison pour comparer une tension dépendant de la tension appliquée à l'entrée de circuit, à savoir la tension à la sortie du circuit (10), avec la valeur de référence, dans lequel le circuit de comparaison est réalisé sous forme de microcontrôleur (16), et dans lequel
le circuit de commande (32) comprend un circuit de combinaison (12) relié au circuit de démarrage (15) et conçu pour,
- si le circuit de commande (32) détecte une tension supérieure à la valeur de référence sur l'entrée de circuit (8), connecter l'entrée de commutation (11) du composant de commutateur (9) à un potentiel formant au moins temporairement le signal de commande pour passer à la commutation du composant de commutateur (9), et
- si le circuit de commande (32) détecte une tension inférieure à la valeur de référence ou si le circuit de commande (32) n'effectue pas de comparaison de la tension avec la valeur de référence en l'absence d'alimentation électrique, appliquer un signal de sortie du circuit de démarrage (15) comme signal de commande à l'entrée de commutation (11) du composant de commutateur (9), et dans lequel
le circuit de combinaison (12) comprend un élément de commutation, à savoir un transistor (19), comprenant une entrée, une sortie et une entrée de commande pour commander une connexion entre l'entrée et la sortie, dans lequel
- l'entrée est reliée au potentiel de la masse,
- la sortie est reliée aussi bien au circuit de démarrage (15) qu'à l'entrée de commutation (11) du composant de commutateur, et
- l'entrée de commande est connectée au circuit de comparaison (16),
- au moins une batterie interne (4) et au moins une connexion pour une batterie de véhicule (5), dans lequel la batterie interne est la première source d'énergie (4) et la batterie de véhicule est la seconde source d'énergie (5),
- un commutateur de voie d'alimentation (3) conçu pour connecter la batterie interne (4) ou la connexion de la batterie du véhicule (5) à l'entrée de circuit (8) du circuit (2) en fonction d'une tension au niveau de la connexion de la batterie du véhicule (5), d'une tension de la batterie interne (4) et/ou d'un signal fourni.

2. Appareil électrique (7) selon la revendication 1, **caractérisé en ce que** le circuit de démarrage est conçu comme un circuit de retard (15) pour la sortie retardée et/ou lissée d'une tension (23) appliquée à l'entrée de circuit (8), dans lequel le circuit de retard (15) est de préférence conçu comme un filtre passe-bas.

3. Appareil électrique (7) selon la revendication 2, **caractérisé en ce que** le circuit de retard et le circuit de commande sont conçus de sorte que la tension retardée et/ou lissée est transmise au moins temporairement sous forme de signal de commande à l'entrée de commutation (11) du composant de commutateur, et **en ce que** le composant de commutateur (9) est conçu pour commuter en fonction d'une différence de tension (27) entre la tension à l'entrée de circuit (8) et la tension à l'entrée de commutation (11).

4. Appareil électrique (7) selon l'une quelconque des revendications précédentes, **caractérisé en ce que** le circuit de démarrage (15) comprend un élément de mémoire (22) et est conçu de sorte que,
lorsque la connexion entre l'entrée et la sortie de l'élément de commutation est commutée en continuité, le signal de commande correspond au potentiel de la masse et, lorsque l'élément de commutation est commuté en interruption, correspond à une tension de l'élément de mémoire (22), dans lequel l'élément de mémoire (22) est alors déchargé lorsqu'il est connecté au potentiel et, lorsque l'élément de commutation est commuté en interruption, il est chargé par la tension à l'entrée de circuit (8).

5. Appareil électrique (7) selon l'une des revendications précédentes, **caractérisé en ce que** les moyens de couplage sont réalisés sous forme de condensateur, de différentiel et/ou d'amplificateur opérationnel.

6. Appareil électrique (7) selon l'une des revendications précédentes, **caractérisé en ce que** le composant de commutateur (9) est réalisé sous forme de transistor, de préférence sous forme de MOSFET.

7. Appareil électrique (7) selon l'une des revendications précédentes, réalisé sous forme d'appareil de télépéage ou de tachygraphe.
